# EUROPEAN PATENT APPLICATION

(11) **EP 0 813 274 A1**
(43) Date of publication of application: **17.12.1997**
(21) Application number: 95924524.2
(22) Date of filing: 07.07.1995
(51) Int. Cl.: H02G 1/02, H01R 9/05, H01R 17/12, H01R 43/00

(54) **WORK WITHOUT STOPPING SIGNAL TRANSMISSION AND CONNECTOR**

(30) Priority: 29.07.1994 JP 196271/94
(71) Applicant: NIKODENKI KOGYO CO., LTD., Tokyo 115 (JP)
(72) Inventor: OHSHIRO, Yoshio, Tokyo 115 (JP)
(74) Representative: Kirschner, Klaus Dieter, Dipl.-Phys.
(86) International application number: JP9501363
(87) International publication number: WO9604704

(57) **Abstract**

To change a coaxial cable (3), the ends of a bypass cable (7) are inserted into the branch holes of the connectors (9). Then the coaxial cable (3) to be replaced is removed. Signals can be transmitted through the bypass cable (7) instead of the cable (3). Then a new coaxial cable (3A) is connected to the connectors (9) and the bypass cable (7) is removed. Thus, without stopping signal transmission, the coaxial cable (3) can be replaced with a new cable (3A).

## Description

### (TECHNICAL FIELD)

The present invention relates to a working method of executing work without stopping television signals or the like during transmission when a coaxial cable, a repeater such as an amplifier or the like constituting a CATV system (Cable Television system) is inspected or replaced and a connector therefor.

### (BACKGROUND TECHNIQUE)

In the CATV system, a number of amplifiers, coaxial cables and other repeaters are used between from a head end in which an antenna for receiving electric waves is disposed to a receiver of a subscriber who receives the CATV service. The environment where the system is installed is varied and the repeaters and cables are sometimes damaged due to various causes. Accordingly, it is required that maintenance and inspection are performed relatively frequently and when any damage is found the damage is inspected and repaired quickly.

For example, when one of the coaxial cables constituting the system is replaced, a working time for the replacement is set to a time from midnight to early morning that utilization of the system by subscribers is minimum in order to prevent interruption of broadcasting and reduction of the service given to the subscribers. Particularly, when a cable for a trunk line, an amplifier for a trunk line or the like is replaced or is moved to another location, an interruption time of broadcasting and a duration thereof are notified beforehand to many subscribers and the work is performed quickly.

However, the conventional working method as described above has the following problems to be solved.

First, when the work is performed from midnight to early morning that utilization is minimum in order to prevent reduction of the service given to the subscribers, there is a problem that a labor cost relative to the work is increased.

Further, when contents of the work are complicated and it takes substantially a long time to perform the work, the work is divided to be performed several times, so that the cost of the work is further increased.

In order to solve the above problem, heretofore, a working method without stopping signal transmission has been attempted in which sleeves of a perfect cable are removed partially at both ends thereof positioned at both sides of a working section in which a coaxial cable is to be replaced and the both ends of the bypass cable are electrically connected to bypass signals.

In such a conventional working method, however, a job for repairing or restoring the cable with the sleeves removed is required intricately after completion of the work. Furthermore, when the restoring job is performed incompletely, water penetrates from the restored portions, so that coaxial cables or repeaters disposed in the vicinity thereof are damaged and deteriorated.

The present invention has been made in view of the above problems and it is a first object of the present invention to provide a working method without stopping signal transmission capable of easily connecting and detaching a bypass cable and replacing a coaxial cable and/or a repeater without damaging a perfect cable.

Further, it is another object of the present invention to provide a connector with branch hole capable of easily connecting and detaching the bypass cable in the working method without stopping signal transmission.

Furthermore, it is still another object of the present invention to provide a working method without stopping signal transmission capable of eliminating a large-scaled work that a long bypass cable is temporarily provided along a coaxial cable to be replaced and is withdrawn after completion of the work.

Further, it is an object to provide an apparatus for a working method without stopping signal transmission which does not require a long bypass cable.

Furthermore, it is an object to provide a connector with branch hole suitable for any working method without stopping signal transmission as described above and used more practically.

Moreover, it is a further object of the present invention to provide a branch probe for electrically and exactly connecting a bypass cable or the like to the connector with branch hole utilized in the working method without stopping signal transmission.

### (Disclosure of the Invention)

In the working method of the present invention, when the coaxial cable is replaced, the connectors with branch hole connected to both ends of the coaxial cable are connected through a bypass cable before the coaxial cable is removed. In this state, even when the coaxial cable is removed, signals are bypassed from the connector with branch hole through a branch probe and the bypass cable so that transmission of signals is not prevented. Thereafter, a new coaxial cable is connected to the connectors with branch hole and finally the bypass cable is removed, so that the coaxial cable can be replaced without stopping signal transmission.

The inventions relative to this method achieve the objects of the inventions by the following means.
(1) A working method without stopping signal transmission, is characterized by comprising:
   when an already installed coaxial cable connected on the way of a signal transmission line and including both ends to which detachable connectors are connected is removed from the signal transmission line without stopping signal transmission,
   connecting the coaxial cable on the way of the signal transmission line through connectors with branch hole at both ends of the coaxial cable;
   connecting between the connectors with branch hole at both ends of the coaxial cable through a bypass cable having branch probes connected to both ends thereof and inserted into branch holes of the connectors to cause a circuit to branch off, so that a bypass of signals is formed; and
   then separating the detachable connectors of the coaxial cable from the connectors with branch hole.
(2) A working method according to (1), is characterized in that after separating the detachable connectors of the already installed coaxial cable from the connectors with branch hole, detachable connectors of a new coaxial cable having the same structure are connected to the connectors with branch hole to thereby replace the already installed coaxial cable with the new coaxial cable.
(3) A working method without stopping signal transmission, is characterized by comprising:
   when an already installed repeater connected on the way of a signal transmission line and including both ends to which detachable connectors are connected is removed from the signal transmission line without stopping signal transmission,
   connecting the repeater on the way of the signal transmission line through connectors with branch hole at both ends of the repeater;
   connecting between the connectors with branch hole at both ends of the repeater through a bypass repeater having branch probes connected to both ends thereof and inserted into branch holes of the connectors to cause a circuit to branch off, so that a bypass of signals is formed by the bypass repeater; and
   then separating the detachable connectors of the repeater from the connectors with branch hole.
(4) A working method according to (1), is characterized in that after separating the detachable connectors of the already installed repeater from the connectors with branch hole, detachable connectors of a new repeater having the same structure are connected to the connectors with branch hole to thereby replace the already installed repeater with the new repeater.
(5) A connector with branch hole connected between detachable connectors and a signal transmission line at both ends of an already installed coaxial cable in order to remove from the signal transmission line the already installed coaxial cable or repeater connected on the way of the signal transmission line and including both ends to which the detachable connectors are connected without stopping signal transmission, is characterized by comprising:
   a shell which is not rotated when the detachable connector of the coaxial cable or repeater is connected or separated, and includes a center contact as an axis, and a branch hole formed in the shell and into which a branch probe is inserted from the outside of the shell toward a center conductor.
(6) A connector with branch hole according to (5), is characterized by comprising a lid for sealing the branch hole when the branch probe is not inserted into the branch hole and which is electrically equivalent to an outer wall of the shell.
(7) A branch probe is characterized by comprising an external sleeve which is electrically and mechanically connected to a shell of a connector with branch hole, a center contact supported to an axial portion of the external sleeve through an insulative spacer to be electrically connected to a center contact of the connector and urged by spring force to be moved toward a center conductor of the connector.
(8) A branch probe according to Claim (7), is characterized in that the insulative spacer for supporting the center contact surrounds a tip portion of the center contact when the branch probe is not mounted to the connector with branch hole and is urged by spring force to be moved back to expose the tip portion of the center contact when the branch probe is mounted to the connector.
(9) A branch probe is characterized by comprising a center contact divided in a longitudinal direction thereof and a spring serving to disconnect electrical continuity of the center contact when the branch probe is not mounted to a clamp and to attain electrical continuity of the center contact by means of compression force in the longitudinal direction of the center contact when the branch probe is mounted to the clamp.
(10) A working method without stopping signal transmission, is characterized by comprising:
   when an already installed coaxial cable connected on the way of a signal transmission line and including both ends to which detachable connectors are connected is removed from the signal transmission line without stopping signal transmission,
   connecting the coaxial cable on the way of the signal transmission line through connectors with branch hole at both ends of the coaxial cable;
   forming a bypass of signals between the connector with branch hole and the vicinity of an end of the coaxial cable between which the detachable connector of the coaxial cable is connected, by means of a lead cable including one end to which a branch probe which is inserted into a branch hole of the connector to cause a circuit to branch off is attached and the other end to which a branch probe which penetrates a sheath of the coaxial cable near to an end of the coaxial cable to cause a circuit to branch off is attached;
   then separating the detachable connectors of the coaxial cable from the connectors with branch hole.
(11) A working method according to (10), is characterized by comprising;
   after the detachable connectors of the coaxial cable is separated from the connectors with branch hole,
   connecting detachable connectors of a new coaxial cable having the same structure to the connectors with branch hole to thereby replace the already installed coaxial cable with the new coaxial cable.
(12) A working method without stopping signal transmission, is characterized by comprising:
   when an already installed coaxial cable connected on the way of a signal transmission line and including both ends to which detachable connectors with branch hole are connected is removed from the signal transmission line without stopping signal transmission,
   connecting the coaxial cable on the way of the signal transmission line through different connectors with branch hole at both ends of the coaxial cable;
   forming a bypass of signals between the detachable connector with branch hole of the coaxial cable and the different connector with branch hole by means of a lead cable including one end to which a branch probe which is inserted into a branch hole of the different connector to cause a circuit to branch off is attached and the other end to which a branch probe which is inserted into a branch hole of the detachable connector of the coaxial cable to cause a circuit to branch off is attached;
   then separating the detachable connector with branch hole of the coaxial cable and the different connector with branch hole from each other.
(13) A working method according to (12), is characterized by comprising:
   after the detachable connector with branch hole of the coaxial cable and the different connector with branch hole are separated from each other,
   connecting detachable connectors with branch hole of a new coaxial cable having the same structure to the connectors with branch hole to thereby replace the already installed coaxial cable with the new coaxial cable.
(14) An apparatus for a working method for removing an already installed coaxial cable connected on the way of a signal transmission line and including both ends to which detachable connectors are connected from the signal transmission line without stopping signal transmission, is characterized by comprising:
   connectors with branch hole connected between the detachable connectors and the signal transmission line at both ends of the coaxial cable;
   lead cables including one end to which a branch probe which is inserted into a branch hole of the connector to cause a circuit to branch off is attached and the other end to which a branch probe which penetrates a sheath of the coaxial cable near to an end of the coaxial cable to cause a circuit to branch off is attached; and
   clamps for holding the coaxial cable in the vicinity of ends of the coaxial cable to support the branch probes which penetrate the sheath of the coaxial cable to cause a circuit to branch off.
(15) A connector with branch hole according to (5), is characterized by comprising:
   a shell fixed to an end of an outer conductor of the coaxial cable at an end of the cable;
   a center contact supported in an axial portion of the shell to be electrically connected to a center conductor of the cable;
   a connecting metal fitting mounted to surround an open end of the shell and to be rotated freely with respect to the shell;
   a threaded portion formed in the connecting metal fitting for connecting the open end of the shell to an object to be connected by screwing the threaded portion; and
   a locknut for pressing the connecting metal fitting to the open end of the shell at an external periphery of the shell to prevent the connecting metal fitting from being rotated freely on the external periphery of the shell after the open end of the shell has been connected to the object to be connected.
(16) A connector with branch hole according to (15), is characterized by comprising a packing held between the locknut and the connecting metal fitting for sealing between the shell and the connecting metal fitting.
(17) A connector with branch hole according to (15), is characterized in that after the locknut and the connecting metal fitting are mounted to be freely rotated each other on the external periphery of the shell and the connecting metal fitting is rotated to connect the open end of the shell to the object to be connected by screwing the threaded portion of the connecting metal fitting, the locknut, the connecting metal fitting and the shell are connected through the threaded portion and a holding ring so that the shell is pulled toward the object to be connected when the locknut is rotated.

### (BRIEF DESCRIPTION OF THE DRAWINGS)

Fig. 1 illustrates the working method without stopping signal transmission according to the present invention;
Fig. 2 illustrates a repeater replacement method according to the present invention (part 1);
Fig. 3 illustrates a repeater replacement method according to the present invention (part 2);
Fig. 4 illustrates an electrical connection state of a connector with branch hole;
Fig. 5 illustrates a second working method without stopping signal transmission according to the present invention;
Fig. 6 illustrates a third working method without stopping signal transmission according to the present invention;
Fig. 7 illustrates the function of a clamp and a branch probe;
Fig. 8 is a side view of primary portions at each process of the second working method according to the present invention shown in Fig. 5;
Fig. 9 is a side view at the final process of the second working method according the present invention shown in Fig. 5;
Fig. 10 illustrates a clamp mounted to a coaxial cable and a branch probe, in which (a) is a perspective view of the clamp in an opened state, (b) is a side view of the clamp mounted to the coaxial cable and (c) is a partially sectional view of the branch probe;
Fig. 11 is a partially sectional view illustrating an embodiment of a connector with branch hole;
Fig. 12 is a partially sectional view illustrating a first modification of the connector with branch hole;
Fig. 13 is a partially sectional view illustrating a second modification of the connector with branch hole;
Fig. 14 is a partially sectional view illustrating a third modification of the connector with branch hole;
Fig. 15 is a partially sectional view illustrating a fourth modification of the connector with branch hole;
Fig. 16 is a partially sectional view illustrating a fifth modification of the connector with branch hole; and
Fig. 17 is a sectional view illustrating an embodiment of a branch probe.

### (BEST MODE FOR IMPLEMENTING THE INVENTION)

The present invention is now described in detail with reference to embodiments shown in the drawings.

### 〈FIRST WORKING METHOD〉

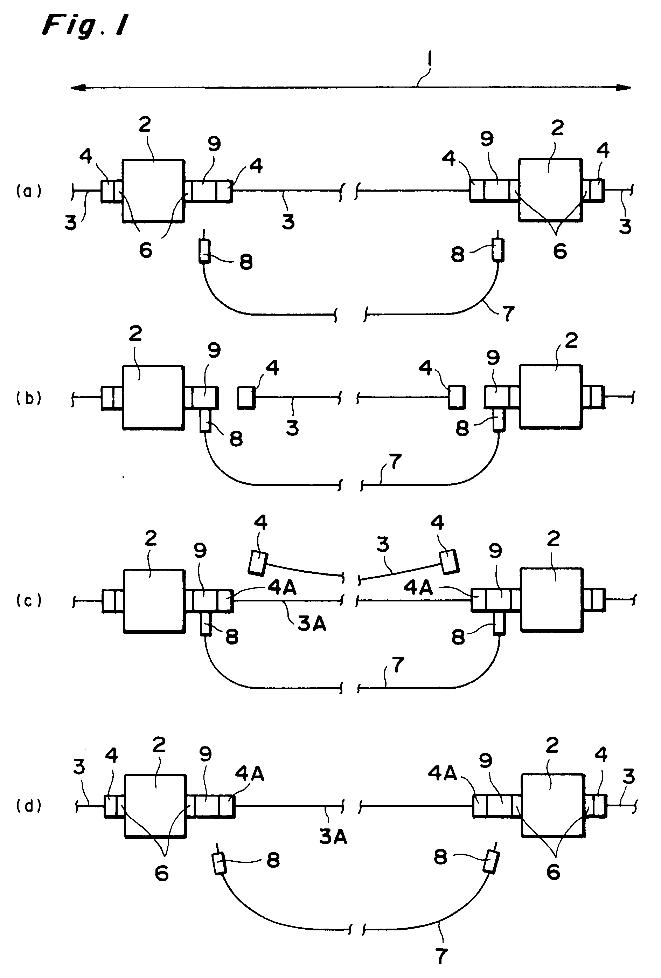

Fig. 1 illustrates an embodiment of the working method without stopping signal transmission according to the present invention.

Figs. 1(a) to (d) are side view's illustrating a signal transmission line at each process when the working method of the present invention is implemented.

As shown in Fig. 1(a), the signal transmission line 1 includes, for example, amplifiers 2 and some coaxial cables 3. Detachable connectors 4 are attached to both ends of the coaxial cable 3 so that the coaxial cable 3 can be connected to and separated from the amplifiers 2 easily. Further, connecting plug seats 6 are attached to input and output sides of the amplifier 2 so as to be able to connect the detachable connectors 4 to the amplifier 2.

In this embodiment, the coaxial cable 3 installed between two amplifiers 2 is replaced for repair and inspection by way of example.

In order to implement the working method of the present invention, connectors 9 with branch hole according to the present invention described later are disposed between the detachable connectors 4 attached to both sides of the coaxial cable 3 and the connecting plug seats 6 of the amplifier 2. The connector 9 with branch hole of Fig. 1 is used as an adapter, while in the present invention such an adapter and other connectors are named a connector generically.

The term "detachable" means that the connector 9 with branch hole and the coaxial cable 3 can be connected to and separated from each other easily. The connector 9 with branch hole or the detachable connector 4 may be handled to attain the detachable operation. Accordingly, as the detachable connectors 4, connectors of BNC type, F type, FT type or the like well known in the prior art can be used.

The structure of the connector is described later, while the connector includes a branch hole formed in the side thereof not shown in Fig. 1 and the branch probe 8 of the bypass cable 7 is inserted into the branch hole of the connector to thereby be electrically connected to the connector.

More particularly, when the branch probe 8 is inserted into the branch hole of the connector 9, a center contact and an outer conductor of the connector 9 with branch hole are electrically connected to a center contact and an outer conductor of the branch probe 8, respectively. Thus, a bypass which leads from the connector 9 with branch hole through the branch probe 8 to the bypass cable 7 is formed.

Fig. 1(b) shows the state that the branch probe 8 of the bypass cable 7 is just connected to the connector 9 with branch hole. In this state, as shown in Fig. 1(b), a bypass is formed from the amplifier 2 through the connector 9 with branch hole, the branch probe 8, the bypass cable 7, the opposite branch probe 8, the opposite connector 9 with branch hole to the opposite amplifier 2. In this state, even when the coaxial cable 3 is removed at the detachable connector 4 from the connector 9, signals to be transmitted through the coaxial cable 3 are not interrupted.

Then, as shown in Fig. 1(c), a new coaxial cable 3A with which the coaxial cable 3 is replaced is taken out. Detachable connectors 4A attached to both ends of the coaxial cable 3A are connected to the connectors 9 with branch hole.

Thereafter, as shown in Fig. 1(d), the branch probes 8 of the bypass cable 7 are removed from the connectors 9 with branch holes to thereby complete the work. The bypass cable 7 is withdrawn after completion of the work. More particularly, the state shown in Fig. 1(d) is the state that the coaxial cable 3 shown in Fig. 1(a) is replaced with the new coaxial cable 3A. During the replacement operation, any one of the coaxial cable 3 and the bypass cable 7 always ensures a path of signals and accordingly the work can be performed without stopping signal transmission.

In order to achieve the above objects, materialization of the connector 9 with branch hole as described above is required. Further, materialization of the branch probe 8 is also required. The materialization is described later. Next, description is made to the fact that the present invention can be utilized even in the case where not only the coaxial cable but also a repeater such as an amplifier is replaced.

### 〈REPLACEMENT OF REPEATER〉

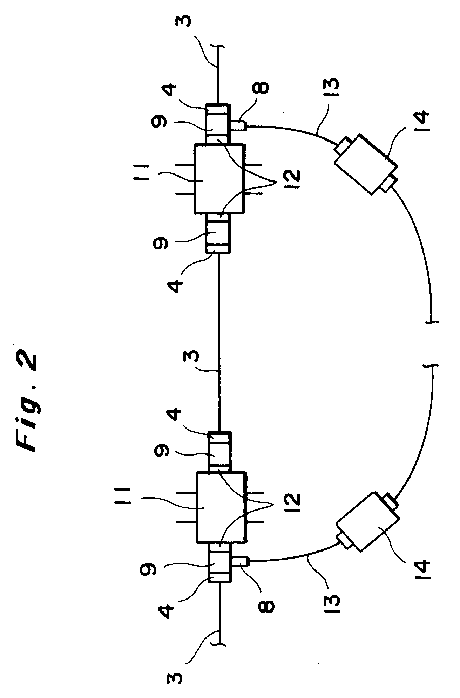

Fig. 2 is a schematic diagram illustrating implementation of the working method without stopping signal transmission according to the present invention in case where the amplifier of the signal transmission line as described above is replaced.

In the previous embodiment, the coaxial cable connecting between two amplifiers is replaced. In Fig. 2, the working method of replacing two repeaters and a coaxial cable 3 connecting therebetween en bloc as shown in Fig. 2 is described.

In this case, the connectors 9 with branch hole are attached to the connecting plug seats 12 on the input and output sides of the repeaters 11 previously. Other portions of the signal transmission line are structured in the same manner as Fig. 1. When the repeaters 11 are replaced, a bypass cable 13 with two repeaters 14 connected on the way thereof is provided separately as shown in Fig. 2. The branch probes 8 are connected to both ends of the bypass cable 13. The branch probes 8 are connected to the connectors 9 with branch hole disposed on the outer side of the repeaters 11 disposed on both sides. In this state, the coaxial cable 3 including the two repeaters 11 can be removed to thereby make replacement and/or inspection of the portion including the two repeaters 11 without obstructing the flow of signals transmitted in the signal transmission line.

Further, application of this working method is not necessarily limited to the case where all portions including the repeaters 11 are replaced and the working method can be adopted in the case where a board within the repeater is replaced and/or inspected. In the case of inspection, the repeater 11 is not necessarily required to be removed from the line, and a cover or lid not shown is opened to thereby perform a predetermined operation. However, since the function of the repeater is stopped during the inspection, the bypass is required.

The repeaters 14 connected to the bypass cable 13 may be the same as the repeater 11 or may be an apparatus having the substitution function during working.

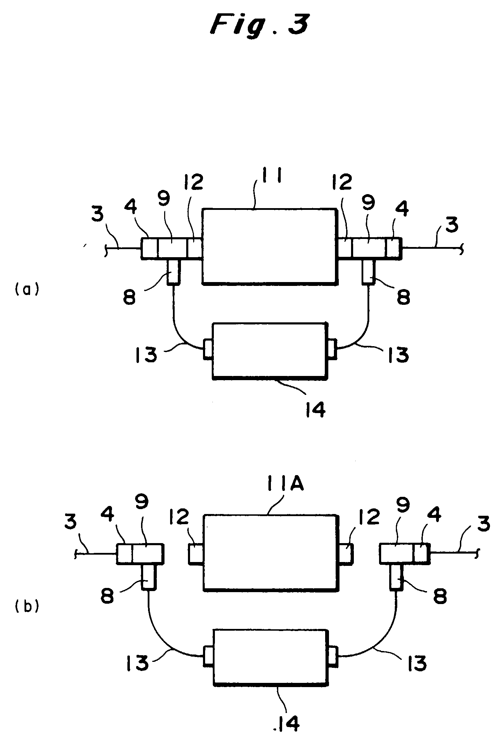

Fig. 3 illustrates another example of a method of replacing an amplifier.

In this embodiment, an example in which one repeater 11 is replaced is described. In the same manner as shown in Fig. 2 even in this case, a bypass cable 13 is used to connect between the connectors 9 with branch hole disposed on both sides of the repeater 11. A repeater 14 which is a substitution of the repeater 11 is connected to the bypass cable 13. In this state, as shown in Fig. 3(b), by removing the connecting plug seats 12 disposed on both sides of the repeater 11, the repeater 11 is removed from the signal transmission line. Thus, a new repeater 11A is disposed to connect the connecting plug seats 12 to the connectors 9 with branch hole. In the present invention, the connecting plug seat is also described as a kind of detachable connector. The subsequent operation is the same as the example shown in Fig. 1.

### 〈CONNECTOR WITH BRANCH HOLE〉

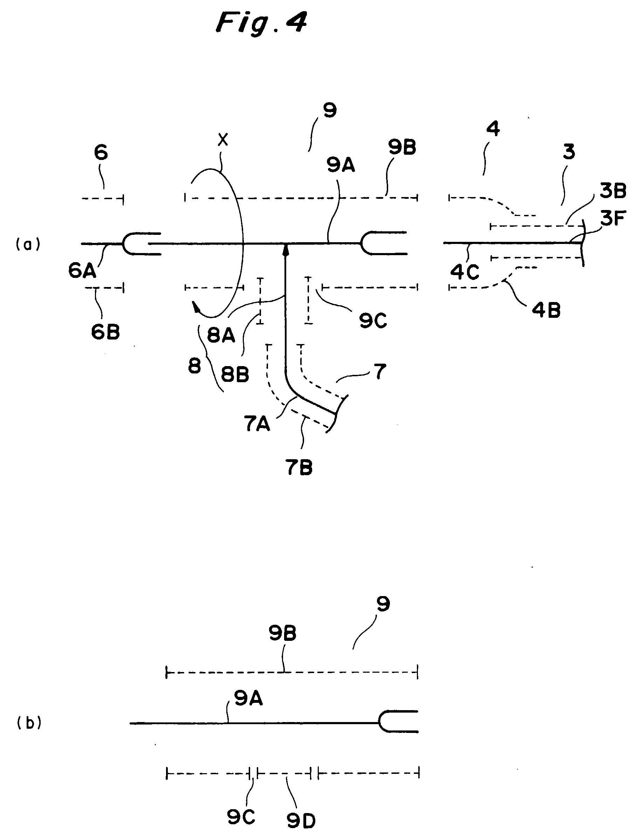

Fig. 4 illustrates an electrical connection of the connector with branch hole.

A definite sectional structure of the connector with branch hole is described later, while its electrical connection is as shown in Fig. 4.

In Fig. 4, outer conductors are shown by broken line and center contacts are shown by solid line.

More particularly, the connecting plug seat 6 for an amplifier includes a female type center contact 6A and an outer conductor 6B. A center contact 9A of the connector 9 with branch hole includes a male type structure on the side of the amplifier and a female type structure on the side of the coaxial cable. Further, an outer conductor 9B of the connector 9 includes a branch hole 9C for attaching the branch probe 8 thereto. A center conductor 7A and an outer conductor 7B of the bypass cable 7 are electrically connected to a center contact 8A and an outer conductor 8B of the branch probe 8, respectively. The center contact 8A of the branch probe 8 is pressed to the center contact 9A of the connector 9 with branch hole by means of a mechanism described later so that the center contact 8A is electrically connected to the center contact 9A.

On the other hand, the detachable connector 4 is disposed on the side of the coaxial cable of the connector 9 with branch hole. A center conductor 3F and an outer conductor 3B of the coaxial cable 3 are electrically connected to a center contact 4C and an outer conductor 4B of the detachable connector 4, respectively. In this manner, a circuit from the connecting plug seat 6 for the amplifier on the left side to the coaxial cable 3 is constituted and a circuit between the bypass cable 7 and the connector 9 with branch hole is formed in a portion of branch hole 9C of the connector 9.

The connector 9 with branch hole is provided to be adapted to implement the present invention without modifying the connector for the amplifier and the coaxial cable since the connector for the amplifier and the coaxial cable used heretofore has no branch hole. Thus, the coaxial cable and the amplifier can be replaced easily as described above. However, for example, when the object of the working method is to handle only the coaxial cable, the connector 9 with branch hole may be structured integrally with the connecting plug seat 6 of the amplifier.

In this case, the two coaxial cables are electrically connected to the amplifier in parallel with each other to thereby reduce an impedance to a half. However, the impedance is mismatched only during implementation of the working method while when a level of a transmitted signal is sufficiently large, deterioration of a received image of a subscriber is suppressed to the minimum.

Further, by constructing the connector 9 with branch hole so that an electric field in the vicinity of the connector 9 is not disturbed when the branch probe 8 is removed from the connector 9 with branch hole, there is no problem that the characteristic of the connector 9 is degraded as compared with a conventional connector.

More particularly, as shown in Fig. 4(b), when the branch probe is not attached to the connector 9 with branch hole, the branch hole 9C is hermetically sealed and closed by a lid 9D so that the lid is electrically equivalent to the outer wall of the connector 9. A definite structure thereof is described later, while a problem relative to the electrical characteristics is dissolved.

By adopting the above working method, the bypass cable can be easily built without damaging a perfect cables thereabouts and can replace the coaxial cable and the repeater without stopping signal transmission.

### 〈SECOND WORKING METHOD〉

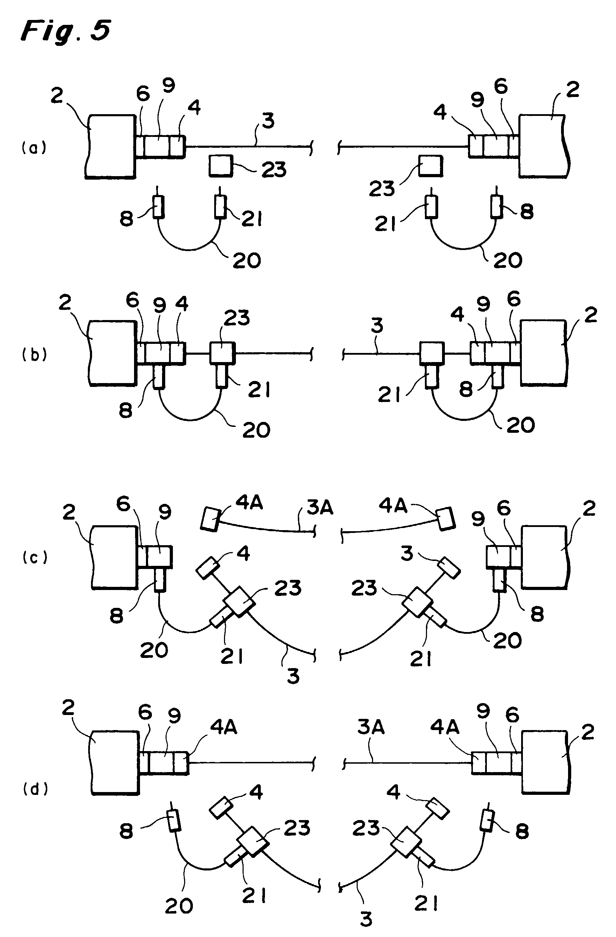

Referring now to Fig. 5, the second working method without stopping signal transmission according to the present invention is described.

Figs. 5(a), (b), (c) and (d) are side views illustrating the signal transmission line at each stage when the method of this embodiment is implemented.

First, as shown in Fig. 5(a), it is assumed that the signal transmission line includes amplifiers 2 and a coaxial cable 3 connecting therebetween. The object of the present invention is to replace the coaxial cable 3 without stopping signal transmission.

In the embodiment, the connectors 9 with branch hole are disposed between the detachable connectors 4 connected to ends of the coaxial cable 3 and the connecting plug seats 6 disposed on the input and output sides of the amplifiers 2. Separately from the connectors with branch hole, a pair of relatively short lead cables 20 are provided right and left as shown in Fig. 5(a). A branch probe 8 is attached to one end of the lead cable 20 to be electrically connected to the connector 9 described above and a branch probe 21 having another structure is attached to the other end of the lead cable 20. The branch cable 21 is attached to a portion near to the end of the coaxial cable 3 by means of a clamp 23.

Fig. 5(b) shows its state. The clamp 23 is attached to the coaxial cable at a location sufficiently near to the detachable connector 4 as far as excessive bending is not exerted on the lead cable 20 and operation of the detachable connector 4 is prevented. The branch probe 21 breaks through or pierces an external sheath of the coaxial cable 3 to be electrically connected to a center conductor and an outer conductor of the coaxial cable 3 as described later. The clamp 23 is auxiliarily provided so as to position and electrically connect the branch probe 21. When the lead cables 20 are connected to both ends of the coaxial cable 3, a bypass is formed through the amplifier 2, the connecting plug seat 6, the connector 9, the branch probe 8, the lead cable 20, the branch probe 21, the coaxial cable 3, the opposite branch probe 21, the lead cable 20, the branch probe 8, the connector 9, the connecting plug seat 6 and the amplifier 6 as shown in Fig. 5(b). Accordingly, after the state shown in Fig. 5(b), even when the detachable connector 4 is removed from the connector 9 with branch hole, the signal transmission is not prevented.

Fig. 5(c) shows the state in which a new coaxial cable 3A is installed after the detachable connectors 4 connected to both ends of the coaxial cable 3 are removed from the connectors 9 with branch hole.

It is noticed that the coaxial cable 3 has been installed to, for example, an electric pole in the normal state. On the other hand, the new coaxial cable 3A with which the coaxial cable 3 is replaced is installed in the same location instead of the coaxial cable 3. Accordingly, the new coaxial cable 3A is installed and the detachable connectors 4A connected to both ends of the coaxial cable 3A are connected to the connectors 9 with branch hole. Thereafter, as shown in Fig. 5(d), the branch probes 8 of the lead cables 20 are removed from the connector 9 to thereby complete the replacement work of the coaxial cable without stopping signal transmission.

At this time, in the embodiment, most of the already installed coaxial cable 3 to be replaced is utilized as the bypass cable. More particularly, in this work, it is possible to transmit signals originally while there is a characteristic problem or the object of the work is to replace the coaxial cable 3 required to be replaced due to any cause with the new coaxial cable 3A. Accordingly, the coaxial cable 3, that is, the already installed coaxial cable 3 is sufficiently useful as the bypass cable. Furthermore, adoption of this working method eliminates the procedure that the bypass cable is installed in parallel with the line separately and the branch probes connected to both ends of the bypass cable are connected to the connectors 9 with branch hole. The bypass cable must be withdrawn when the work is completed. When the coaxial cable to be replaced is long, the bypass cable is also long. Accordingly, the installation and withdrawal operation requires much labor. Furthermore, there is a problem that the bypass cable having the length and strength in accordance with a working location must be provided.

However, the working method has no problem since the already installed coaxial cable 3 to be replaced is utilized as a part of the bypass cable. That is, since the already installed coaxial cable 3 must be withdrawn after completion of the work, labor is not increased.

Accordingly, the working method can be implemented only by providing the pair of lead cables 20 of a fixed length having the relative generality regardless of the length of the coaxial cable to be replaced and the clamps 23 to thereby simplify preparation of the work and clearance work extremely.

### 〈THIRD WORKING METHOD〉

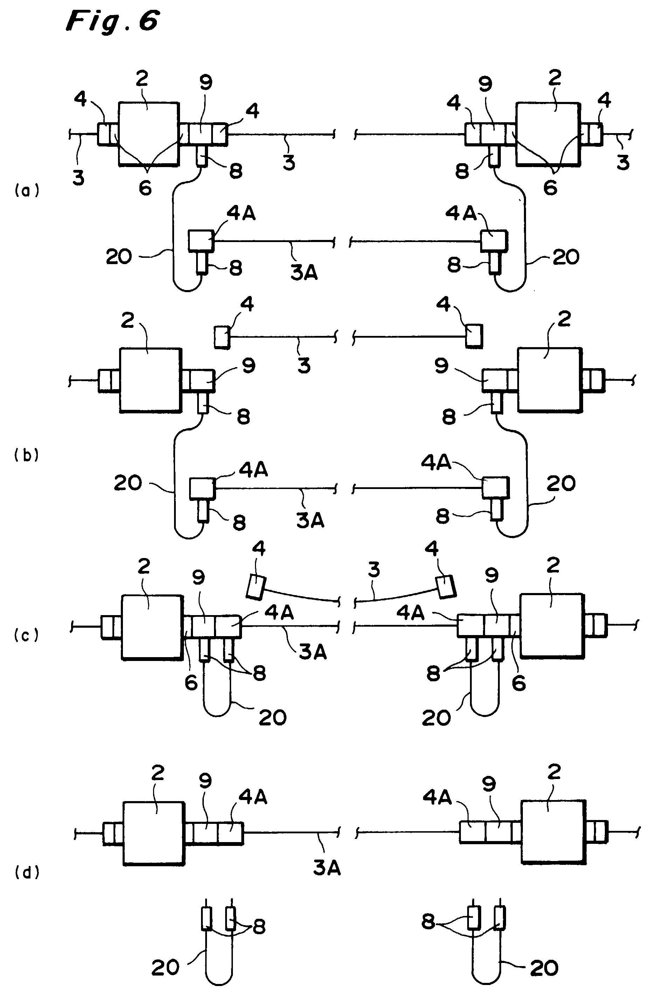

Referring now to Fig. 6, a third working method without stopping signal transmission according to the present invention is described.

Figs. 6(a), (b), (c) and (d) are side views illustrating the signal transmission line at each stage when this method is implemented.

This embodiment adopts substantially the same principle as the second working method basically. However, in the second working method, the clamp is used to connect the branch probe to the already installed cable, while in this embodiment the detachable connectors 4 with branch hole are previously connected to the already installed coaxial cable 3.

Further, the same detachable connectors 4A with branch hole are also connected to both ends of the new coaxial cables 3A with which the already installed coaxial cable 3 is replaced. Thus, when the coaxial cable 3 is replaced with the coaxial cable 3A, the coaxial cable 3A is installed along the already installed coaxial cable 3. The branch probes 8 each connected one end of the lead cables 20 are connected to the detachable connector 4A with branch hole connected to both ends of the coaxial cable 3A. Further, the branch probes 8 each connected to the other end of the lead cables 20 are connected to the branch holes of the connectors 9 in the same manner as the second working method.

Consequently, as shown in Fig. 6(a), signals are transmitted from the amplifier 2 through the connecting plug seat 6, the connector 9, the branch probe 8, the lead cable 20, the branch probe 8, the detachable connector 4 with branch hole and the newly installed coaxial cable 3A to the amplifier disposed on the opposite side. That is, a bypass of signals is formed without passing through the already installed coaxial cable 3. In this state, as shown in Fig. 6(b), the already installed coaxial cable 3 is removed from the connectors 9. Then, as shown in Fig. 6(c), the detachable connectors 4A of the new coaxial cable 3A are connected to the connectors 9. In the stage shown in Fig. 6(c), signals are transmitted from the amplifier 2 through the connecting plug seat 6, the connector 9, the detachable connector 4A and the coaxial cable 3A to the opposite amplifier 2. That is, in this state, the lead cables 20 are not necessary. Thus, as shown in Fig. 6(d), the lead cables 20 are removed from both ends of the new coaxial cable 3A. In the same manner as the second working method, the pair of lead cables 20 having the generality can be used to replace the coaxial cable having any length. In this embodiment, the detachable connectors 4 or 4A with branch hole are previously connected to the already installed coaxial cable 3 or the newly installed coaxial cable 3 to thereby be able to connect the lead cables 20 without breaking through the external sheath of the cable or without executing other work so that the operativity is improved and the working time is reduced.

### 〈CONNECTION OF BRANCH PROBE〉

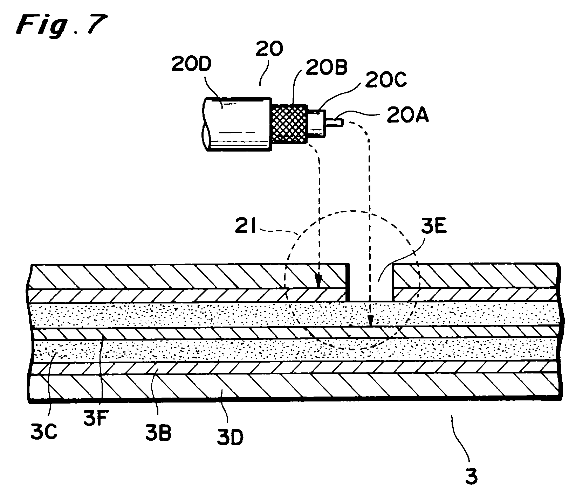

Fig. 7 illustrates the coaxial cable 3 and the clamp 23 and the branch probe 21 electrically connected to the coaxial cable 3.

Referring now to Fig. 7, the function of the clamp 23 and the branch probe 21 is briefly described. The definite structure thereof is described later.

As shown in Fig. 7, the coaxial cable 3 to be replaced includes a center conductor 3F, an insulator 3C covering the outer periphery of the center conductor, an outer conductor 3B disposed outside of the insulator, and a sheath 3D covering the outer conductor. When the above branch probe is connected to the coaxial cable 3, a hole 3E having a proper diameter is formed in the sheath 3D and the outer conductor 3B of the coaxial cable 3. A needle-shaped member described later is used to electrically connect the center conductor 20A of the lead cable 20 to the center conductor 3F of the coaxial cable 3 and electrically connect the outer conductor 20B of the lead cable 20 to the outer conductor 3B of the coaxial cable 3. In order to attain this object, the branch probe 21 is adapted to receive an end of the lead cable 20 and includes the needle-shaped member for electrical connection.

### 〈ACTUAL SECOND WORKING METHOD〉

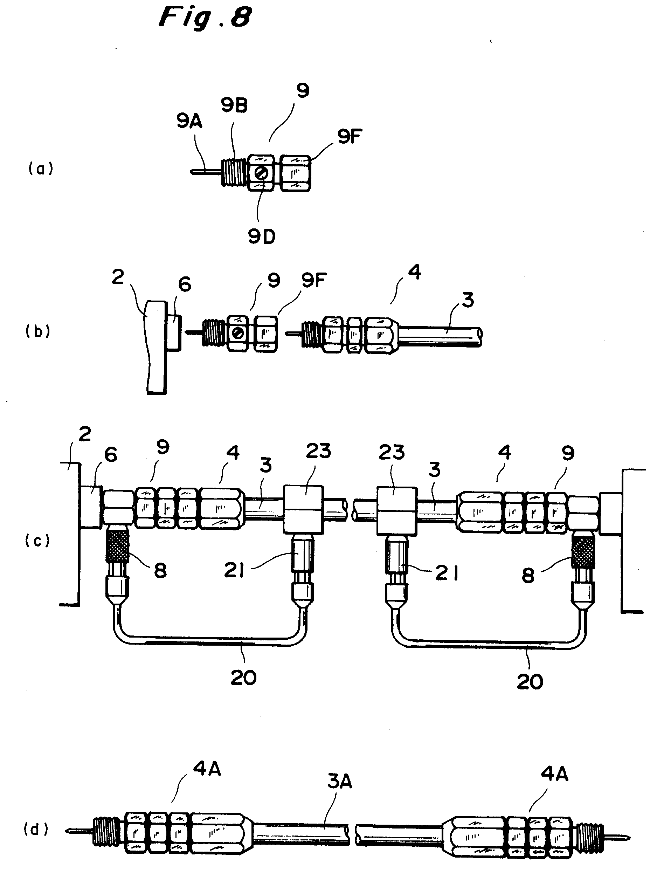

Referring now to Fig. 8, the definite external appearance of each portion in case where the working method shown in Fig. 5 is implemented is described.

Fig. 8(a) is a side view showing a definite embodiment of the connector 9 with branch hole.

The connector 9 with branch hole includes a male portion of a center contact 9A protruded to be electrically connected to the amplifier or the like and an outer conductor 9B disposed to surround the center contact. Further, the lid 9D for closing the branch hole described above is screwed into a middle portion of the connector 9. A connection metal fitting 9F is mounted on the side in which the coaxial cable is connected. As shown in Fig. 8(b), the detachable connector 4 used generally heretofore is connected to the end of the coaxial cable 3 and is also connected through the connector 9 to the connecting plug seat 6 of the amplifier 2. For example, when the detachable connector 4 is FT type connector, the coaxial cable 3 and the connector body are integrally structured so that the connector body cannot be rotated. Accordingly, in this case, the connection metal fitting 9F of the connector 9 which is an adapter is rotated to thereby connect and disconnect the connector 9 to and from the detachable connector 4.

In this manner, as shown in Fig. 8(c), the connecting plug seat 6, the connector 9 with branch hole and the detachable connector 4 of the coaxial cable 3 are connected one another and the branch probe 8 is connected to the side of the connector 9. Further, the branch probe 21 is attached to the coaxial cable 3 by means of the clamp 23 to thereby connect the coaxial cable to the lead cable 20. Fig. 8(d) is a side view showing the new coaxial cable 3A with which the coaxial cable 3 is replaced and the detachable connectors 4A connected to both ends of the new coaxial cable 3A.

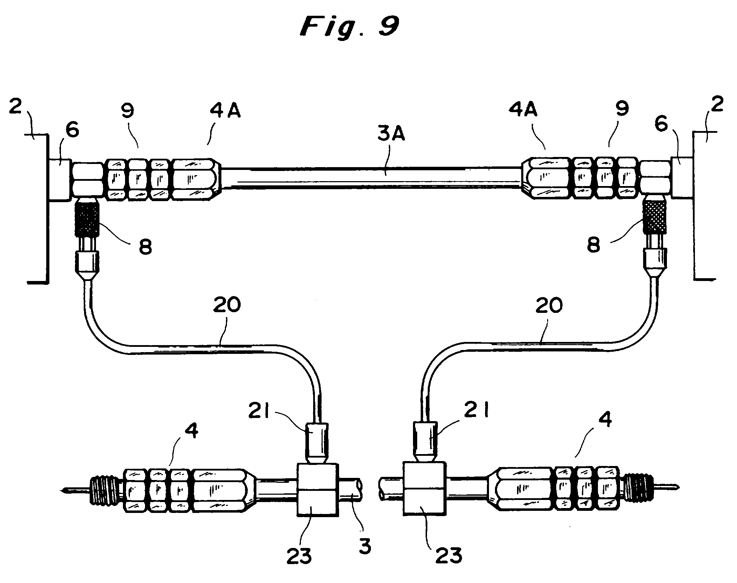

Fig. 9 is a side view showing the new coaxial cable 3A connected.

As shown in Fig. 9, before connection of the new coaxial cable 3A, a bypass circuit is formed by the amplifier 2, the connecting plug seat 6, the connector 9 with branch hole, the branch probe 8, the lead cable 20, the branch probe 21 and the already installed coaxial cable 3.

### 〈CLAMP AND BRANCH PROBE〉

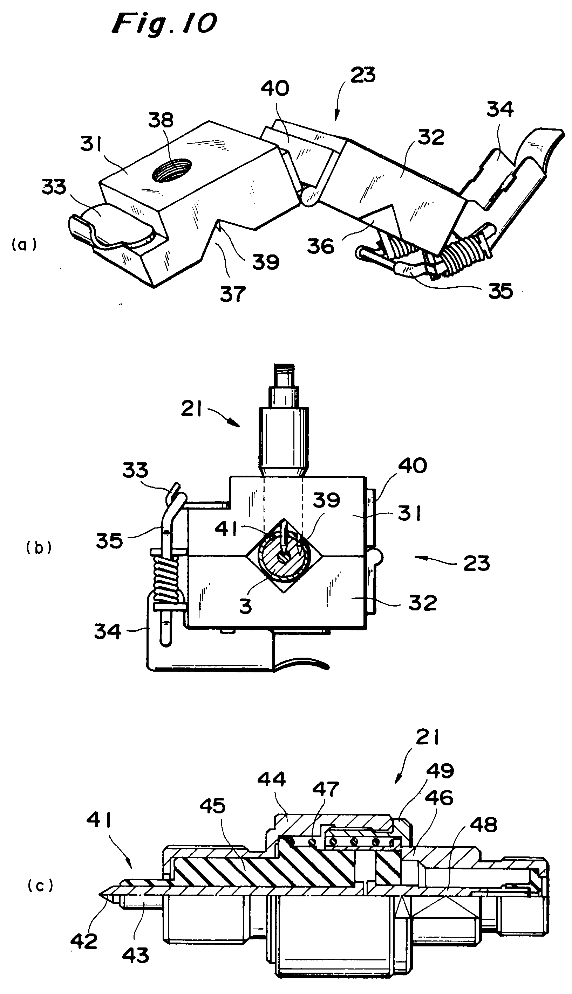

Fig. 10 illustrates the clamp 23 mounted near to the end of the coaxial cable and the branch probe 21 as described above.

Fig. 10(a) is a perspective view showing the clamp 23 which is not mounted to the cable and which includes two divided blocks 31 and 32 connected to each other by a hinge 40. One block 31 is provided with a hook 33 and the other block 32 is provided with a spring-type buckle 34. As shown in Fig. 10(b), opposite surfaces of the blocks 31 and 32 are brought into contact with each other to hold the coaxial cable 3 therebetween to thereby mount the clamp 23 to the coaxial cable 3. At this time, an arm 35 of the buckle 34 is engaged with the hook 33 to thereby hold the blocks 31 and 32. For this purpose, V-grooves 36 and 37 are formed in the opposite surfaces of the blocks 31 and 32. A throughhole 38 as shown in Fig. 10(a) is formed toward the V-groove 37 of one block 31. The inner side of the throughhole 38 is threaded so that the branch probe 21 shown in Fig. 10(b) is screwed into the throughhole 38. Further, the V-groove 37 of the block 31 is provided with a needle 39 so that the needle pierces the outer conductor of the coaxial cable 3.

Fig. 10(c) is a partially sectional view showing the branch probe.

When the branch probe 21 is screwed into the throughhole 38 after mounting the clamp 23 to the coaxial cable 3 as described above, the center contact 42 disposed in the center of the branch probe 21 breaks through the outer sheath of the coaxial cable 3 to come into contact with the center conductor of the coaxial cable 3. In this case, as described above with reference to Fig. 7, the hole must be previously formed in the outer conductor and the insulator of the coaxial cable.

As shown in Fig. 10(c), the center contact 42 of the branch probe 21 is covered by an insulative spacer 43 made of plastic. The insulative spacer 43 serves to prevent the center contact 42 from coming into contact with the outer conductor of the coaxial cable when the center contact pierces the outer conductor of the coaxial cable.

Further, a cap 49 is screwed into one end of a shell 44 constituting the body of the branch probe 21. The cap 49 is connected to one end of the shell 44 so that a connection metal fitting 46 can be rotated freely. A detachable connector well known as a general coaxial cable is screwed into an external peripheral surface of the right end portion of the connection metal fitting 46.

The center contact 42 is divided into two right and left portions as shown in Fig. 10(c). A righthand portion 48 of the center contact 42 is structured to receive a center pin disposed in the connector of the general coaxial cable. Further, the lefthand portion is structured to slightly slide together with the insulative spacer 43 in the longitudinal direction within the shell 44. As shown in Fig. 10(c), a spring 47 is held between the cap 49 and the insulative spacer 43 and is urged to push the center contact 42 in the direction of the tip thereof so that the center contacts 42 and 48 are electrically separated.

Thus, before the branch probe 21 is screwed into the throughhole 38 of the clamp 23, the center contact 42 is electrically separated in the longitudinal direction and accordingly even if the center contact comes into contact with the clamp 23, a short circuit is not caused therebetween. The clamp 23 is electrically connected to the outer conductor of the coaxial cable 3 and is required to be prevented from coming into contact with the center contact 48 of the branch probe 21. When the center contact 42 is pressed to the center conductor of the coaxial cable, the spring 47 is contracted. When the spring 47 is contracted, the center contacts 42 and 48 are electrically continued or connected to each other in the longitudinal direction so that the center conductors between the lead cable and the coaxial cable are electrically connected to each other.

### 〈EMBODIMENT OF CONNECTOR WITH BRANCH HOLE〉

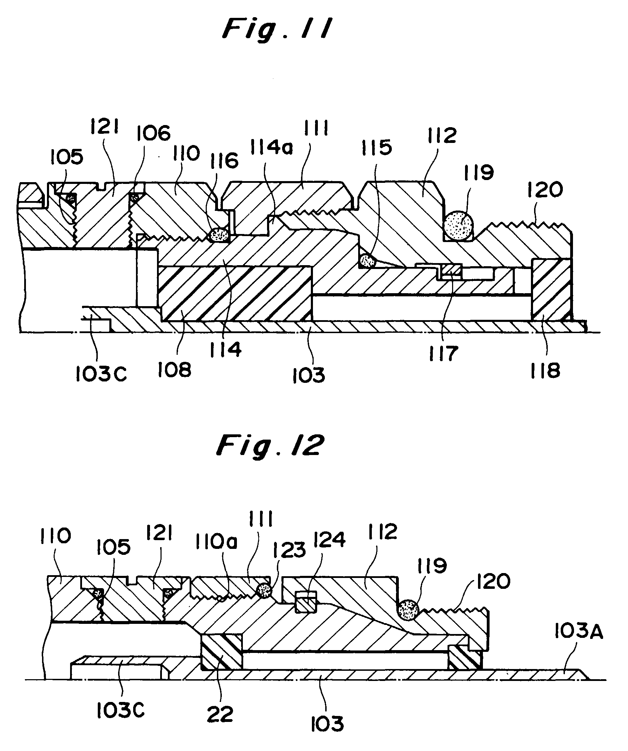

Figs. 11 to 16 show various embodiments of the connector with branch hole.

These connectors may be of the adapter type provided separately from the connecting plug seat of the amplifier and the detachable connector of the coaxial cable or may be structured to have the function of the connecting plug seat of the amplifier and the detachable connector of the coaxial cable.

The connector with branch hole shown in Fig. 11 includes a branch hole 105 formed in a shell portion 110 and a lid 121 screwed into the branch hole 105. An O-ring 106 is held between the lid 121 and the shell 110 in order to increase airtightness therebetween. A lefthand portion not shown of the shell 110 is structured to receive the coaxial cable. The portion has the same structure as that of the general conventional connector and accordingly is not shown. When an end of the coaxial cable is connected to the lefthand portion of the connector through the FT type connector well known heretofore, the working method described with reference to Fig. 6 can be implemented.

Further, the righthand portion of Fig. 11 is mounted to the connecting plug seat of the amplifier.

The righthand portion of a center contact 103 is formed into a mail form which is connected to the center contact of the connecting plug seat and the lefthand portion thereof is formed into a female form which receives the center conductor of the coaxial cable. Further, the center contact 103 is held in the center of a cylindrical holding metal fitting 114 through an insulative spacer 108. The shell 110 is screwed onto the left external periphery of the cylindrical holding metal fitting 114. In addition, an O-ring 116 is held between the shell 110 and the metal fitting 114 in order to seal a gap therebetween.

A locknut 111 and a connecting metal fitting 112 are mounted to the right external periphery of the cylindrical holding metal fitting 114. Both of the locknut 111 and the metal fitting 112 are fitted onto the metal fitting 114 so that the locknut 111 and the metal fitting 112 are rotated freely about the external periphery of the cylindrical holding metal fitting 114. A threaded portion 120 is formed on the right external periphery of the connecting metal fitting 112 to be screwed into the connecting plug seat of the amplifier or the like. An O-ring 119 serves to seal between the connecting plug seat and the connecting metal fitting 112. Further, the connecting metal fitting 112 is held to rotate freely and not to fall off by a holding ring 117 fitted onto the external periphery on the right side of the cylindrical holding metal fitting 114. The locknut 111 is disposed between the shell 110 and the connecting metal fitting 112 and is screwed onto the external periphery on the left side of the connecting metal fitting 112. An insulative spacer 118 serves to support the center contact 103 in the center of the connecting metal fitting 112 so that the center contact 103 penetrates the connector from the left side to the right side in Fig. 11 and is rotated freely together with the connecting metal fitting 112 integrally. An O-ring 115 serves to seal between the cylindrical holding metal fitting 114 and the connecting metal fitting 112.

Such a connector with branch hole can be connected to the connecting plug seat of the amplifier or the like not shown disposed on the right side of Fig. 11 by rotating the connecting metal fitting 112. When the connecting metal fitting 112 is rotated to screw the threaded portion 120 into the connecting plug seat, the screw between the locknut 111 and the connecting metal fitting 112 is loosened and the connecting metal fitting 112 is moved rightward so that the cylindrical holding metal fitting 114 is left at its position as it is. After the connecting metal fitting 112 is screwed into the connecting plug seat tightly and fixed thereto, the locknut 111 is rotated to move the shell 110 and the cylindrical holding metal fitting 114 toward the connecting metal fitting 112. Thus, as shown in Fig. 11, the connecting metal fitting 112 squeezes the O-ring 115 to thereby seal between the cylindrical holding metal fitting 114 and the connecting metal fitting 112. Further, the locknut 111 is rotated to press the lefthand portion of the connecting metal fitting 112 to a wedge-shaped flange 114a so that rotation of the connecting metal fitting 112 is prevented and the whole connector with branch hole is fixed to the amplifier or the like.

In such a connector with branch hole, for example, when the branch probe is connected to the branch hole 105 and the repeater such as the amplifier disposed on the right side thereof is replaced, the amplifier can be separated from the connector without rotating the connector in the direction indicated by an arrow X shown in Fig. 4. In other words, after the locknut 111 is first rotated to slide the shell 110 leftward, the connecting metal fitting 112 is rotated to be separated from the connecting plug seat. In this case, since the shell 110 is not rotated, excessive force is not exerted on the branch probe and the bypass cable connected to the branch hole 105.

The connector with branch hole shown in Fig. 12 has also substantially the same function as the connector shown in Fig. 11. The right end of the center contact 103 is formed into a male portion 103a and the left end thereof is formed into a female portion 103c. Further, an insulative spacer 22 is disposed in order to hold the center contact in the center of the shell 110. A branch hole 105 is formed in the shell 110 and a lid 121 is attached thereto. The connecting metal fitting 112 is structured to be rotated freely about the external periphery of the shell 110 and be prevented from falling off from the connector by means of a holding metal fitting 124. A threaded portion 120 formed on the external periphery on the right side of the connecting metal fitting 112 is screwed into the connecting plug seat of the amplifier or the like. An O-ring 119 is disposed to seat therebetween. Further, the locknut 111 is screwed onto the threaded portion 110a formed on the external periphery of the shell 110 and the locknut 111 is rotated to press an O-ring 123 to the connecting metal fitting 112 so that the portion between the locknut and the connecting metal fitting is sealed. In other words, after the connecting metal fitting 112 is rotated to screw the threaded portion 120 thereof into the connecting plug seat of the amplifier or the like, the locknut 111 is rotated to press the O-ring 123 to the connecting metal fitting 112, so that the portion therebetween is sealed and rotation of the connecting metal fitting 112 is prevented to thereby fix the connector with branch hole to the connecting plug seat.

Even in this case, by rotating the connecting metal fitting 112, the connector can be connected to and separated from the amplifier or the like without rotating the shell 110.

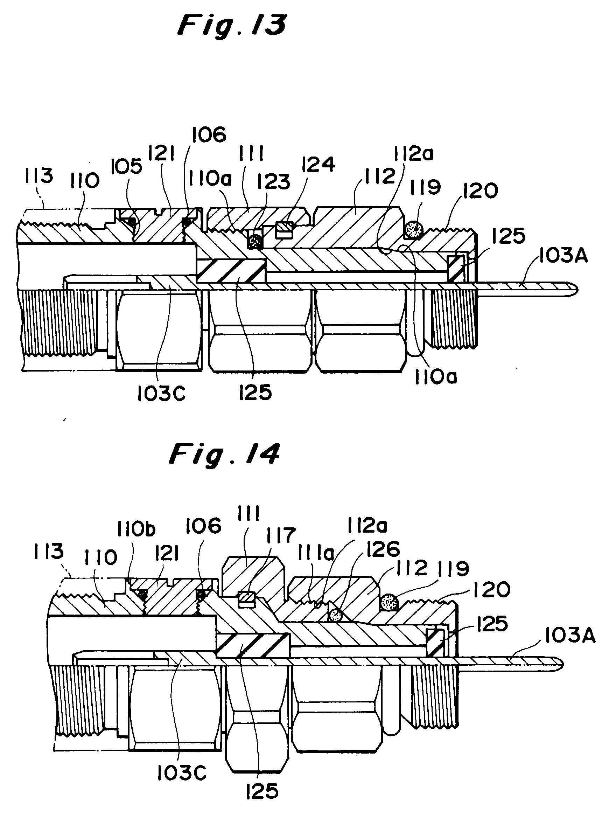

The connector with branch hole shown in Fig. 13 is different from that of Fig. 12 in that the holding metal fitting 124 is held between the locknut 111 and the connecting metal fitting 112 to couple the locknut and the connecting metal fitting with each other instead of fixing the connecting metal fitting 112 to the shell 110. In other words, the left end portion is held between the locknut 111 and the shell 110, so that the connecting metal fitting 112 is rotated freely and is prevented from falling off from the connector. The structure of the righthand portion of the connecting metal fitting 112 is the same as that of Fig. 12 described above. Further, the locknut 111 is screwed onto the threaded portion 110a formed on the external periphery of the shell 110. The structure of the branch hole 105, the lid 121 and the like disposed in the shell 110 is the same as described above.

Even in the connector with branch hole thus structured, the connecting metal fitting 112 can be rotated freely to connect the connector to the connecting plug seat of the amplifier. Further, when the connecting metal fitting 112 is rotated freely, the locknut 111 is moved rightward with respect to the shell 110. Thus, when the connecting metal fitting 112 has been tightened completely, the locknut 111 is rotated to pull the shell 110. Thus, the O-ring 123 is held between the shell 110 and the connecting metal fitting 112 and is squeezed to thereby seal therebetween. At the same time, rotation of the connecting metal fitting 112 is prevented and fixed by joining tapered surfaces 110a and 112a.

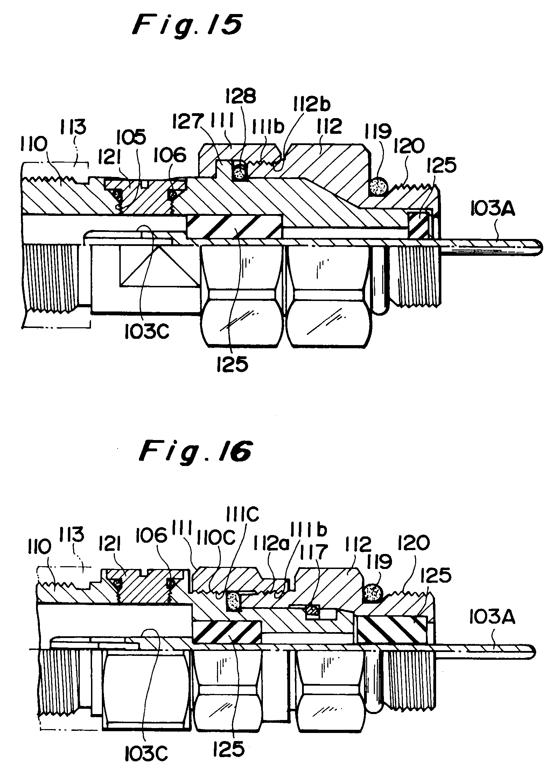

In the embodiment shown in Fig. 14, the connecting metal fitting 112 is screwed onto the right end portion of the locknut 111. That is, a threaded portion 112a formed on the inner periphery of the connecting metal fitting 112 is engaged with a threaded portion 111a formed on the outer periphery of the right end portion of the locknut 111. An O-ring 126 is held between the locknut 111 and the connecting metal fitting 112 to seal therebetween. Further, the locknut 111 is positioned by the holding ring 117 to be freely rotated with respect to the shell 110. Thus, only the connecting metal fitting 112 can be rotated to screw the threaded portion 120 thereof into the connecting plug seat of the amplifier or the like. Further, when the locknut 111 is rotated to pull the shell 110 rightward in Fig. 14, the O-ring 126 is squeezed between the locknut 111 and the connecting metal fitting 112 to thereby seal therebetween exactly.

In this example, the outer diameter of the locknut 111 is made slightly larger than that of the connecting metal fitting 112 to thereby improve the operativity.

In the embodiment shown in Fig. 15, the connecting metal fitting 112 is substantially the same as that of Fig. 14, while the locknut 111 is disposed to surround an annular projection 127 formed on the shell 110. By rotating the locknut 111 after the connecting metal fitting 112 is screwed into the connecting plug seat, the shell 110 is pulled toward the connecting metal fitting 112, so that the O-ring 128 is squeezed to thereby seal therebetween exactly. Other portions are the same as those of the previous embodiments. Thus, a gap produced between the shell 110 and the connecting metal fitting 112 is closed to ensure electrical shield.

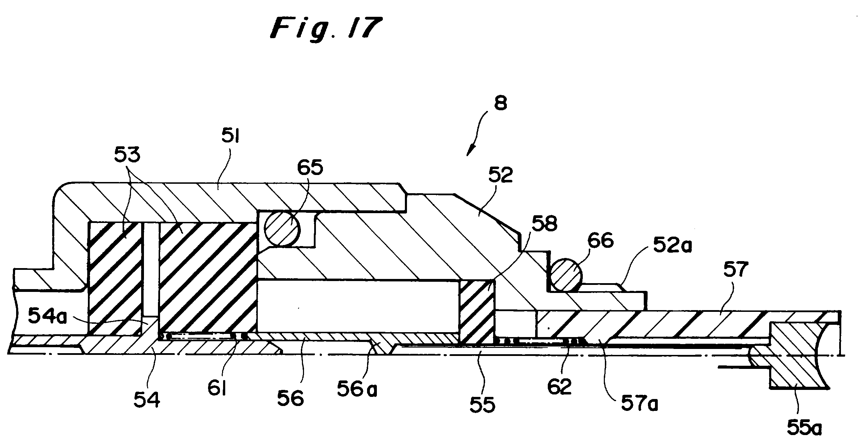

In Fig. 16, the connecting metal fitting 112 is structured to be rotated freely while being prevented from falling off from the connector by means of the holding ring 117 disposed on the external periphery of the right end portion of the shell 110. The left end portion of the connecting metal fitting 112 is covered by the locknut 111. A threaded portion 111c formed on the inner periphery of the left end of the locknut 111 is engaged with a threaded portion 110c formed on the outer periphery of the shell 110. Further, a threaded portion 111b formed on the inner periphery of the right end of the locknut 111 is engaged with a threaded portion 112a formed on the outer periphery of the left end of the connecting metal fitting 112. Thus, when the locknut 111 is rotated after the connecting metal fitting 112 is screwed into the connecting plug seat, the shell 110 is pulled toward the connecting metal fitting 112 and an O-ring 129 is squeezed to thereby seal therebetween. The structure of other portions is substantially the same as that of other connectors.

Fig. 17 shows an embodiment of the branch probe 8 attached to the branch hole of the connector as described above. Fig. 17 is a sectional view showing an upper half of the branch probe positioned above the center line.

The branch probe shown in Fig. 17 includes a righthand portion which is pressed to tile center contact of the connector 9 with branch hole and a lefthand portion connected to the bypass cable or the lead cable not shown. An external sleeve 52 is screwed into the righthand portion of a shell 51. The external sleeve 52 includes a threaded portion 52a formed on the external periphery of the right end thereof and the threaded portion 52a is screwed into the branch hole 9C of the connector 9. At this time an O-ring 66 serves to seal the peripheral portion of the branch hole 9C. Further, another O-ring 65 serves to seal between the shell 51 and the external sleeve 52. A center contact 54 is supported on the left side of the center portion of the shell 51 by means of an insulative spacer 53. The center contact 54 includes a female terminal disposed on the left side portion thereof to receive a connecting terminal for center conductor not shown of the bypass cable and the lead cable.

Further, a center contact 55 is disposed at the axial portion of the external sleeve 52 through an insulative spacer 57. The insulative spacer 57 is made of a plastic pipe and is structured to slide freely in the longitudinal direction at the axial portion of the external sleeve 52. Further, the center contact 55 disposed in the center portion of the insulative spacer 57 is also structured to slide freely in the longitudinal direction with respect to the insulative spacer 57. In addition, a cylindrical conductor sleeve 56 is disposed at the axial portion on the left side of the external sleeve 52. The conductor sleeve 56 is structured to be able to slide in the longitudinal direction thereof while being in contact with the center conductor 54 disposed on the left side thereof. A spring 61 is held between a rib 54a disposed on the external periphery at the center of the center conductor 54 and a left end surface of the conductor sleeve 56 and the conductor sleeve 56 is urged to be pushed rightward in Fig. 17 by means of the spring 61. Further, the left tip portion of the center contact 55 is structured to abut against a rib 56a disposed on the inner portion of the conductor sleeve 56. In addition, the conductor sleeve and the center contact 55 are fixedly mounted. A spring 62 is fitted into the lefthand portion of a rib 57a disposed on the inner portion at the center of the insulative spacer 57. The spring 62 is held between an insulative spacer 58 disposed in the inner portion of the external sleeve 52 and the rib 57a of the insulative spacer 57.

A large-diameter portion 55a disposed in the right end portion of the center contact 55 is a portion which is pressed to the center contact of the connector 9 with branch hole described above.

The branch probe 8 structured above is operated as follows.

First, the external sleeve 52 is rotated to screw the threaded portion 52a thereof into the branch hole 9C of the connector. At this time, the insulative spacer 57 prevents the center contact 55 from coming into contact with the branch hole 9C or other portion of the connector and causing short circuit. Then, when the insulative spacer 57 is pressed to the center contact of the connector 9, the insulative spacer 57 receives at the lefthand portion thereof force to contract the spring 62. That is, only the insulative spacer 57 is moved leftward, so that the large-diameter portion 55a of the center contact 55 is protruded rightward. Consequently, the center contact 55 is pressed to the center conductor of the connector with branch hole to be electrically connected to the center conductor. Accordingly, the center contact 55 can be exactly protected insulatively while the branch probe is being attached to the connector with branch hole. In this state, when the branch probe is further pushed strongly, the spring 61 is contracted so that the insulative spacer 57 and the center contact 55 are both moved leftward. Thus, a contact pressure of the center contact 55 to the center conductor of the branch connector can be increased.

## Claims

1. A working method without stopping signal transmission, comprising:
when an already installed coaxial cable connected on the way of a signal transmission line and including both ends to which detachable connectors are connected is removed from said signal transmission line without stopping signal transmission,
connecting said coaxial cable on the way of said signal transmission line through connectors with branch hole at both ends of said coaxial cable;
connecting between said connectors with branch hole at both ends of said coaxial cable through a bypass cable having branch probes connected to both ends thereof and inserted into branch holes of said connectors to cause a circuit to branch off, so that a bypass of signals is formed; and
then separating said detachable connectors of said coaxial cable from said connectors with branch hole.

2. A working method according to Claim 1, wherein after separating said detachable connectors of said already installed coaxial cable from said connectors with branch hole, detachable connectors of a new coaxial cable having the same structure are connected to said connectors with branch hole to thereby replace said already installed coaxial cable with said new coaxial cable.

3. A working method without stopping signal transmission, comprising:
when an already installed repeater connected on the way of a signal transmission line and including both ends to which detachable connectors are connected is removed from said signal transmission line without stopping signal transmission,
connecting said repeater on the way of said signal transmission line through connectors with branch hole at both ends of said repeater;
connecting between said connectors with branch hole at both ends of said repeater through a bypass repeater having branch probes connected to both ends thereof and inserted into branch holes of said connectors to cause a circuit to branch off, so that a bypass of signals is formed by said bypass repeater; and
then separating said detachable connectors of said repeater from said connectors with branch hole.

4. A working method according to Claim 3, wherein after separating said detachable connectors of said already installed repeater from said connectors with branch hole, detachable connectors of a new repeater having the same structure are connected to said connectors with branch hole to thereby replace said already installed repeater with said new repeater.

5. A connector with branch hole connected between detachable connectors and a signal transmission line at both ends of an already installed coaxial cable in order to remove from the signal transmission line said already installed coaxial cable or repeater connected on the way of said signal transmission line and including both ends to which said detachable connectors are connected without stopping signal transmission, comprising:
a shell which is not rotated when said detachable connector of said coaxial cable or repeater is connected or separated, and includes a center contact as an axis, and a branch hole formed in said shell and into which a branch probe is inserted from the outside of said shell toward a center conductor.

6. A connector with branch hole according to Claim 5, comprising a lid for sealing said branch hole when said branch probe is not inserted into said branch hole and which is electrically equivalent to an outer wall of said shell.

7. A branch probe comprising an external sleeve which is electrically and mechanically connected to a shell of a connector with branch hole, a center contact supported to an axial portion of said external sleeve through an insulative spacer to be electrically connected to a center contact of said connector and urged by spring force to be moved toward a center conductor of said connector.

8. A branch probe according to Claim 7, wherein said insulative spacer for supporting said center contact surrounds a tip portion of said center contact when said branch probe is not mounted to said connector with branch hole and is urged by spring force to be moved back to expose said tip portion of said center contact when said branch probe is mounted to said connector.

9. A branch probe comprising a center contact divided in a longitudinal direction thereof and a spring serving to disconnect electrical continuity of said center contact when said branch probe is not mounted to a clamp and to attain electrical continuity of said center contact by means of compression force in the longitudinal direction of said center contact when said branch probe is mounted to said clamp.

10. A working method without stopping signal transmission, comprising:
when an already installed coaxial cable connected on the way of a signal transmission line and including both ends to which detachable connectors are connected is removed from said signal transmission line without stopping signal transmission,
connecting said coaxial cable on the way of said signal transmission line through connectors with branch hole at both ends of said coaxial cable;
forming a bypass of signals between said connector with branch hole and the vicinity of an end of said coaxial cable between which said detachable connector of said coaxial cable is connected, by means of a lead cable including one end to which a branch probe which is inserted into a branch hole of said connector to cause a circuit to branch off is attached and the other end to which a branch probe which penetrates a sheath of said coaxial cable near to an end of said coaxial cable to cause a circuit to branch off is attached;
then separating said detachable connectors of said coaxial cable from said connectors with branch hole.

11. A working method according to Claim 10, comprising;
after said detachable connectors of said coaxial cable is separated from said connectors with branch hole,
connecting detachable connectors of a new coaxial cable having the same structure to said connectors with branch hole to thereby replace said already installed coaxial cable with said new coaxial cable.

12. A working method without stopping signal transmission, comprising:
when an already installed coaxial cable connected on the way of a signal transmission line and including both ends to which detachable connectors with branch hole are connected is removed from said signal transmission line without stopping signal transmission,
connecting said coaxial cable on the way of said signal transmission line through different connectors with branch hole at both ends of said coaxial cable;
forming a bypass of signals between said detachable connector with branch hole of said coaxial cable and said different connector with branch hole by means of a lead cable including one end to which a branch probe which is inserted into a branch hole of said different connector to cause a circuit to branch off is attached and the other end to which a branch probe which is inserted into a branch hole of said detachable connector of said coaxial cable to cause a circuit to branch off is attached;
then separating said detachable connector with branch hole of said coaxial cable and said different connector with branch hole from each other.

13. A working method according to Claim 12, comprising:
after said detachable connector with branch hole of said coaxial cable and said different connector with branch hole are separated from each other,
connecting detachable connectors with branch hole of a new coaxial cable having the same structure to said connectors with branch hole to thereby replace said already installed coaxial cable with said new coaxial cable.

14. An apparatus for a working method for removing an already installed coaxial cable connected on the way of a signal transmission line and including both ends to which detachable connectors are connected from said signal transmission line without stopping signal transmission, comprising:
connectors with branch hole connected between said detachable connectors and said signal transmission line at both ends of said coaxial cable;
lead cables including one end to which a branch probe which is inserted into a branch hole of said connector to cause a circuit to branch off is attached and the other end to which a branch probe which penetrates a sheath of said coaxial cable near to an end of said coaxial cable to cause a circuit to branch off is attached; and
clamps for holding said coaxial cable in the vicinity of ends of said coaxial cable to support said branch probes which penetrate the sheath of said coaxial cable to cause a circuit to branch off.

15. A connector with branch hole according to Claim 5, comprising:
a shell fixed to an end of an outer conductor of said coaxial cable at an end of said cable;
a center contact supported in an axial portion of said shell to be electrically connected to a center conductor of said cable;
a connecting metal fitting mounted to surround an open end of said shell and to be rotated freely with respect to said shell;
a threaded portion formed in said connecting metal fitting for connecting said open end of said shell to an object to be connected by screwing said threaded portion; and
a locknut for pressing said connecting metal fitting to said open end of said shell at an external periphery of said shell to prevent said connecting metal fitting from being rotated freely on the external periphery of said shell after said open end of said shell has been connected to said object to be connected.

16. A connector with branch hole according to Claim 15, comprising a packing held between said locknut and said connecting metal fitting for sealing between said shell and said connecting metal fitting.

17. A connector with branch hole according to Claim 15, wherein after said locknut and said connecting metal fitting are mounted to be freely rotated each other on the external periphery of said shell and said connecting metal fitting is rotated to connect said open end of said shell to said object to be connected by screwing said threaded portion of said connecting metal fitting, said locknut, said connecting metal fitting and said shell are connected through said threaded portion and a holding ring so that said shell is pulled toward said object to be connected when said locknut is rotated.
